(19) **Europäisches Patentamt**

**European Patent Office**

**Office européen des brevets**

(11) **EP 1 475 780 B1**

(12) **EUROPEAN PATENT SPECIFICATION**

(45) Date of publication and mention
of the grant of the patent:
**06.09.2006 Bulletin 2006/36**

(51) Int Cl.:
**G10L 15/18** $^{(2006.01)}$

(21) Application number: **04010579.3**

(22) Date of filing: **04.05.2004**

(54) **Voice recognition system for mobile unit**

Spracherkennungssystem für ein Mobilgerät

Système de reconnaissance de la parole pour une unité mobile

(84) Designated Contracting States:
**DE FR GB**

(30) Priority: **08.05.2003 JP 2003129740**

(43) Date of publication of application:
**10.11.2004 Bulletin 2004/46**

(73) Proprietor: **NISSAN MOTOR CO., LTD.**
**Yokohama-shi**
**Kanagawa-ken (JP)**

(72) Inventors:
• **Kaminuma, Atsunobu**
**Yokohama-shi**
**Kanagawa-ken (JP)**
• **Lee, Akinobu**
**Ikoma-shi**
**Nara-ken (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 602 296**

• **METEER M ET AL: "Statistical language modeling combining N-gram and context-free grammars" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, vol. 4, 27 April 1993 (1993-04-27), pages 37-40, XP010110387 ISBN: 0-7803-0946-4**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 475 780 B1

**Description**

**BACKGROUND OF THE INVENTION**

The present invention relates to a voice recognition system installed and used in a mobile unit such as a vehicle, and particularly, to technology concerning a dictionary structure for voice recognition capable of shortening recognition time and improving recognition accuracy.

A voice recognition system needs dictionaries for a voiced language. The dictionaries proposed for voice recognition include a network grammar language dictionary that employs a network structure to express the connected states or connection grammar of words and morphemes and a statistical language dictionary to statistically express connections among words. Reference 1 ("Voice Recognition System," Ohm-sha) points out that the network grammar language dictionary demonstrates high recognition ability but is limited in the number of words or sentences to handle and the statistical language dictionary may handle a larger number of words or languages but demonstrates an insufficiently low recognition rate for voice recognition.

To solve the problems, Reference 2 ("Speech Recognition Algorithm Combining Word N-gram with Network Grammar" by Tsurumi, Lee, Saruwatari, and Shikano, Acoustical Society of Japan, 2002 Autumn Meeting, September 26, 2002) has proposed another technique. This technique adds words, which form connected words in a network grammar language dictionary, to an n-gram statistical language dictionary to uniformly increase the transition probabilities of the words.

A further example of a known voice recognition system which incorporates linguistic and semantic structures, is disclosed in Reference 3 ("Statistical Language Modeling Combining N-gram and Context-free Grammars" by Meteer et al., ICASSP 1993, April 1993, Minneapolis (U.S.A), vol. 4, pages 37-40).

**SUMMARY OF THE INVENTION**

A voice recognition application such as a car navigation system used in a mobile environment is only required to receive voices for limited tasks such as an address inputting voice and an operation commanding voice. For this purpose, the network grammar language dictionary is appropriate. On the other hand, the n-gram statistical language dictionary has a high degree of freedom in the range of acceptable sentences but lacks voice recognition accuracy compared with the network grammar language dictionary. The n-gram statistical language dictionary, therefore, is not efficient to handle task-limited voices.

An object of the present invention is to utilize the characteristics of the two types of language dictionaries, perform a simple prediction of a next speech, change the probabilities of connected words in an n-gram statistical language dictionary at each turn of speech or according to output information, and efficiently conduct voice recognition in, for example, a car navigation system.

An aspect of the present invention provides a voice recognition system includes that a memory unit configured to store a statistical language dictionary which statistically registers connections among words, a voice recognition unit configured to recognize an input voice based on the statistical language dictionary, a prediction unit configured to predict, according to the recognition result provided by the voice recognition unit, connected words possibly voiced after the input voice, and a probability changing unit configured to change the probabilities of connected words in the statistical language dictionary according to the prediction result provided by the prediction unit, wherein the voice recognition unit recognizes next input voice based on the statistical language dictionary changed by the probability changing unit and wherein the memory unit, the voice recognition unit, the prediction unit and the probability changing unit are configured to be installed in the mobile unit.

**BRIEF DESCRIPTION OF THE DRAWINGS**

Figure 1 is a block diagram showing a voice recognition system according to a first embodiment of the present invention.
Figure 2 is a block diagram showing a voice recognition system according to a second embodiment of the present invention.
Figure 3 shows an example of hardware for a voice recognition system according to an embodiment of the present invention.
Figure 4 is a flowchart showing a voice recognition method according to an embodiment of the present invention.
Figure 5 is a view explaining the probability changing method carried out in step S 150 of Fig. 4.
Figure 6 shows an example to improve, in the statistical language dictionary, the connection probabilities of words contained in the network grammar language dictionary and of words or morphemes connectable to the words contained in the network grammar language dictionary.

Figure 7 shows a method of switching a plurality of small-scale network grammar language dictionaries from one to another.

Figure 8 shows an example storing a large-scale network grammar language dictionary 802 in a memory unit 801 and dynamically activating only a node of the dictionary 802 related to a predicted next speech.

Figure 9 shows an example of a network grammar language dictionary displayed on a display unit according to the present invention.

Figure 10 shows connected words displayed in the right window of the display 901 of Fig. 9 after the right window is scrolled.

Figure 11 shows an example that forms connected words from a displayed word and lower-level words and predicts the connected words to be voiced in the next speech.

Figure 12 shows an example of a screen displaying four groups of words each group containing a plurality of connected words.

Figure 13 shows an example of a screen displaying four words displayed on a screen.

Figure 14 shows an example of the network grammar language dictionary.

Figure 15 shows an example of a bi-gram statistical language dictionary.

## DETAILED DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified. The drawings are merely representative examples and do not limit the invention.

General matters about voice recognition will be explained in connection with the present invention. Voice recognition converts an analog input into a digital output, provides a discrete series x, and predicts a language expression $\omega$ most suitable for the discrete series x. To predict the language expression $\omega$, a dictionary of language expressions (hereinafter referred to as "language dictionary") must be prepared in advance. Dictionaries proposed so far include a network grammar language dictionary employing a network structure to express the grammar of word connections and a statistical language dictionary to statistically express the connection probabilities of words.

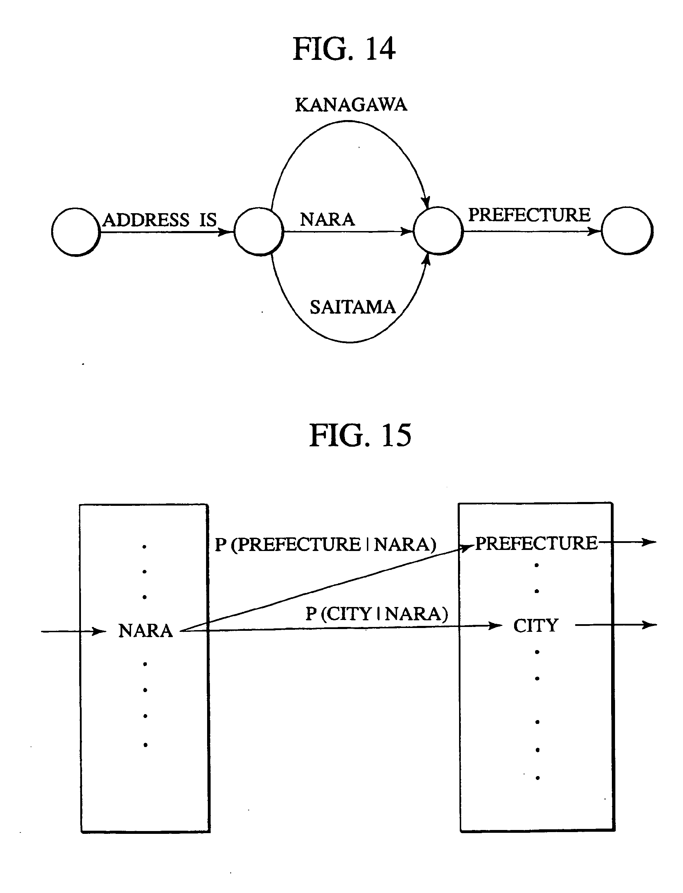

Figure 14 shows an example of the network grammar language dictionary that allows a voice input of, for example, "address is (prefecture name) prefecture." This system presumes that the speech "address is" is always followed by a voicing of (prefecture name) and then a voicing of "prefecture." For the part (prefecture name), the dictionary must store prefecture names in advance. In addition to the prefecture names, the dictionary may contain city names, ward names, town names, and the like. This technique limits words and connections of the words, to improve recognition performance.

On the other hand, the statistical language dictionary statistically processes a large amount of sample data to estimate the transition probabilities of words and morphemes. For this, a widely-used simple technique is an n-gram model. This technique receives a word string $\omega_1\omega_2...\omega_n$ and estimates an appearing probability $P(\omega_1\omega_2...\omega_n)$ according to the following approximation model:

$$P(\omega_1\omega_2...\omega_n) = \prod_{i=1}^{n} P(\omega_i \mid \omega_{i-N+1}...\omega_{i-1}) \qquad (1)$$

The case of n=1 is called uni-gram, n=2 bi-gram (2-gram), and n=3 tri-gram (3-gram).

Figure 15 shows an example of a bi-gram statistical language dictionary. For an input word "Nara" as $\omega_{n-1}$, the transition probability of each word string formed with $\omega_n$ is calculated as follows:

$$P(...Nara, Prefecture, ...) = P(Nara|...) \times P(Prefecture|Nara) \times P(...|Prefecture) \quad (2)$$

According to this expression, the probability is dependent on only the preceding word. If there are many data words, the n-gram statistical language dictionary can automatically include connection patterns among the words. Therefore, unlike the network grammar dictionary, the n-gram statistical language dictionary can accept a speech whose grammar is out of the scope of design. Although the statistical language dictionary has a high degree of freedom, its recognition rate is low when conducting voice recognition for limited tasks.

To solve the problem, the Reference 2 proposes a GA method. Employing this method will improve recognition accuracy by five points or more compared with employing only the n-gram statistical language dictionary.

A voice recognition application such as a car navigation system used in a mobile environment is only required to receive voices for limited tasks such as an address inputting voice and an operation commanding voice. Accordingly, this type of applications generally employs the network grammar language dictionary. Voice recognition based on the network grammar language dictionary needs predetermined input grammar, and therefore, is subjected to the following conditions:

(1) a user must memorize grammar acceptable by a voice recognition system, or
(2) a designer must install every grammar used by a user in a voice recognition system.

On the other hand, the n-gram statistical language dictionary has a high degree of freedom in the range of acceptable grammar but is low in voice recognition accuracy compared with the network grammar language dictionary. Due to this, the n-gram statistical language dictionary is generally not used to handle task-limited speeches. The above-mentioned condition (2) required for the network grammar language dictionary is hardly achievable due to the problem of designing cost Consequently, there is a requirement for a voice recognition system having a high degree of freedom in the range of acceptable speeches like the n-gram statistical language dictionary and capable of dynamically demonstrating recognition performance like the network grammar language dictionary under specific conditions.

The GA method described in the Reference 2 predetermines a network grammar language dictionary, and based on it, multiplies a log likelihood of each connected word that is in an n-gram statistical language dictionary and falls in a category of the network grammar language dictionary by a coefficient, to thereby adjust a final recognition score of the connected word. The larger the number of words in the network grammar language dictionary, the higher the number of connected words adjusted for output. Namely, an output result approaches the one obtainable only with the network grammar language dictionary. In this case, simply applying the GA method to car navigation tasks provides little effect compared with applying only the network grammar language dictionary to the same.

An embodiment of the present invention conducts a simple prediction of a next speech and changes the probabilities of connected words in an n-gram statistical language dictionary at every speech turn (including a speech input and a system response to the speech input), or according to the contents of output information. This results in realizing the effect of the GA method even in voice recognition tasks such as car navigation tasks. The words "connected words" include not only compound words, conjoined words and a set of words but also words linked in a context."

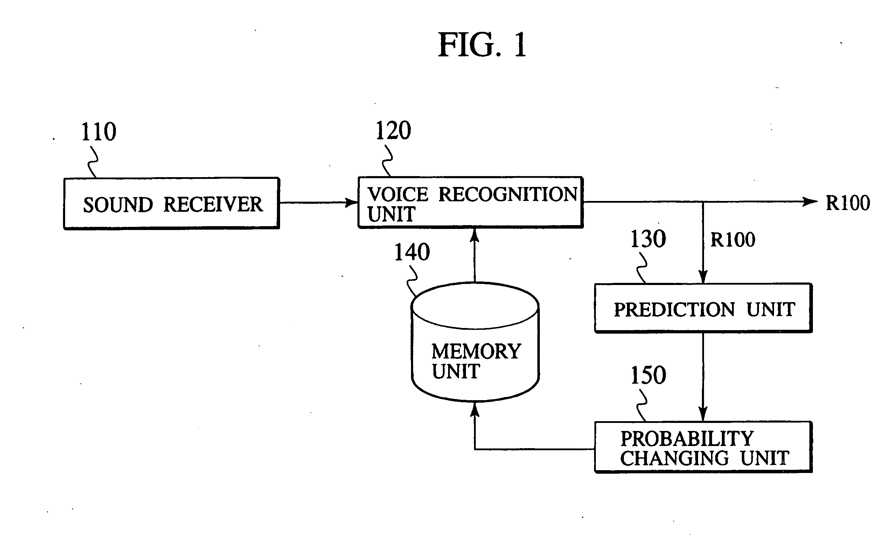

Figure 1 is a block diagram showing a voice recognition system according to a first embodiment of the present invention. The voice recognition system includes a sound receiver 110 to receive sound, a memory unit 140 to store dictionaries, a voice recognition unit 120 to recognize, according to the dictionaries in the memory unit 140, voice from the sound received by the sound receiver 110 and output a recognition resultant signal R100, a prediction unit 130 to predict a next speech according to the recognition resultant signal R100 and output the prediction, and a probability changing unit 150 to update the dictionaries in the memory unit 140 according to the prediction. The sound receiver 110 converts a sound voiced by a user into a sound signal. The voice recognition unit 120 recognizes the sound signal and outputs a recognition resultant signal R100. The recognition resultant signal R100 is in the form of, for example, text. According to recognized words in the text, the prediction unit 130 predicts the contents of a speech to be voiced by the user and transfers the prediction to the probability changing unit 150. According to the transferred prediction, the probability changing unit 150 increases the correct answer probabilities of grammar among words in a statistical language dictionary stored in the memory unit 140. The memory unit 140 stores phonemic and word dictionaries needed for voice recognition and at least one language dictionary describing word connections. The memory unit 140 is referred to for operations such as a recognition operation.

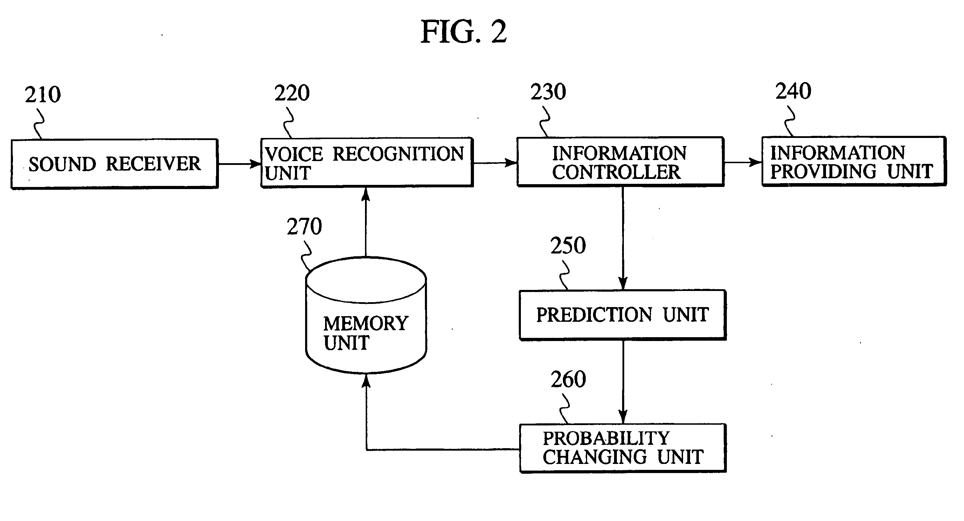

Figure 2 is a block diagram showing a voice recognition system according to a second embodiment of the present invention. The voice recognition system includes a sound receiver 210 to receive sound, a memory unit 270 to store dictionaries, a voice recognition unit 220 to recognize, according to the dictionaries in the memory unit 270, voice from the sound received by the sound receiver 210 and output a recognition resultant signal, an information controller 230 to receive the recognition resultant signal, control information, and output information to an information providing unit 240 and a prediction unit 250, the prediction unit 250 to predict a next speech according to the information from the information controller 230 and output the prediction, and a probability changing unit 260 to update the dictionaries in the memory unit 270 according to the prediction. The sound receiver 210 may be equivalent to the sound receiver 110 of the first embodiment. The voice recognition unit 220 may be equivalent to the voice recognition unit 120 of the first embodiment. The information controller 230 determines information and outputs the information to the information providing unit 240 and prediction unit 250. The prediction unit 250 refers to the information provided by the information controller 230, predicts the contents of a next speech to be voiced by a user, and transfers the prediction to the probability changing unit 260. The prediction units 130 and 250 of Figs. 1 and 2 receive different input information and may output equivalent information. The memory unit 270 may contain, in addition to the dictionaries of the first embodiment, a thesaurus and history data. The information providing unit 240 provides the user with the information output from the information controller 230. This information relates to the five senses such as image information, sound information, tactile information, and the like. The information providing unit 240 may be realized with a visual display, sound speaker, tactile display, force feedback switch, and the like.

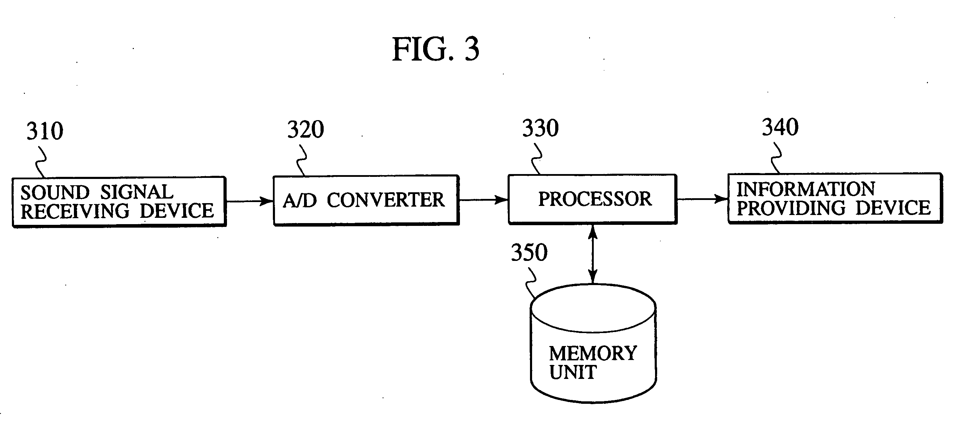

Figure 3 shows an example of hardware for a voice recognition system according to an embodiment of the present invention. The voice recognition system includes a sound signal receiving device 310 to receive an analog sound signal, an A/D converter 320 to convert the input analog signal into a digital signal, a memory unit 350 to store various dictionaries, a processor 330 to process the digital signal from the A/D converter 320 and conduct voice recognition according to the dictionaries in the memory unit 350, and an information providing device 340 to provide a result of the voice recognition. The sound receivers 110 and 210 of Figs. 1 and 2 correspond to the sound signal receiving device 310 and A/D converter 320 of Fig. 3 and may employ a microphone. The A/D converter 320 may employ a real-time signal discretizing device. The A/D converter 320 collects a sound signal and converts it into a discrete voice signal. The voice recognition unit 120 of Fig. 1 may be realized with the processor 330 of Fig. 3 and the memory unit 270 of Fig. 2. The processor 330 may be a combination of CPU, MPU, and DSP used to form an operational system such as a standard personal computer, microcomputer, or signal processor. The processor 330 may have a real-time operating ability. The memory unit may be realized with cache memories, main memories, disk memories, flash memories, ROMs, and the like used as data storage for standard information processing units.

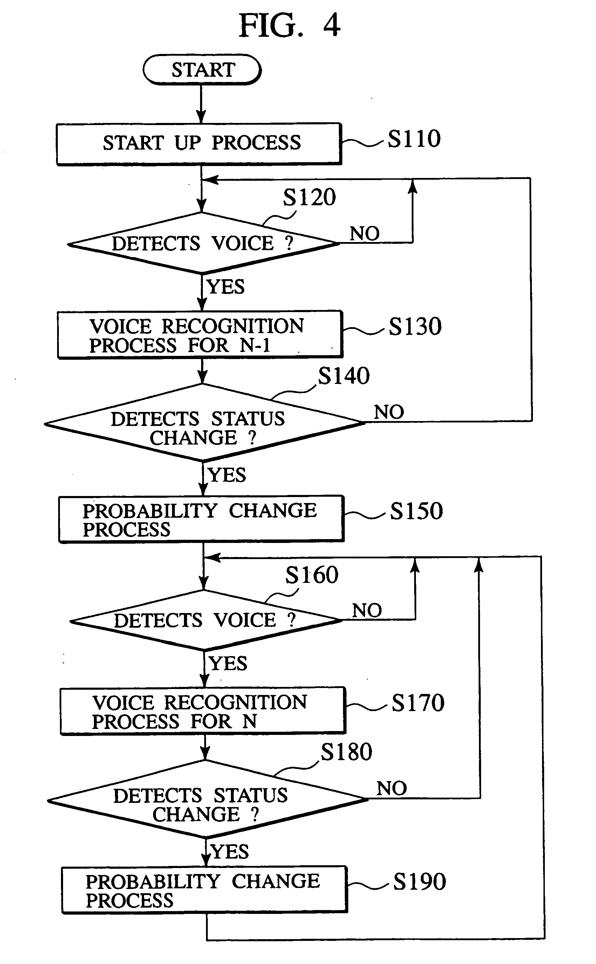

Figure 4 is a flowchart showing a voice recognition method according to an embodiment of the present invention. A first step S 110 initializes a voice recognition system. The first step loads dictionaries for voice recognition to a memory (RAM). It is not necessary to load all dictionaries possessed. Step S120 determines whether or not an input signal is a voice signal. If it is a voice signal (Yes in step S120), step S130 is carried out, and if not (No in step S 120), a voice signal input is waited for. Step S 130 recognizes an "n-1 "th voice signal and converts information contained in the voice signal into, for example, text data. According to the data provided by step S130, step S140 detects a change in the speech. For example, step S130 outputs text data of "an address is going to be input" and step S140 provides "Yes" to indicate that the user will voice a particular address in the next speech. In this way, step S 140 detects a state change and predicts the contents of the next speech. If step S140 is "No" to indicate no state change, the flow returns to step S120 to wait for a voice input.

According to the state change and next speech detected and predicted in step S 140, step S150 changes the probabilities of grammar related to words that are in the predicted next speech and are stored in the statistical language dictionary. The details of this will be explained later. Step S160 detects the next speech. Step S170 detects an "n"th voice. Namely, if step S160 is "Yes" to indicate that there is a voice signal, step S170 recognizes the voice signal and converts information contained in the voice signal into, for example, text data. If step S160 is "No" to indicate no voice signal, a next voice signal is waited for. At this moment, step S150 has already corrected the probabilities of grammar related to words in the statistical language dictionary. Accordingly, the "n"th voice signal is properly recognizable. This improves a recognition rate compared with that involving no step S150. Step S180 detects a state change and predicts a next speech. If step S180 detects a state change, step S190 changes the probabilities of grammar concerning words that are in the predicted next speech and are stored in the statistical language dictionary. If step S180 is "No" to detect no state change, a state change is waited for.

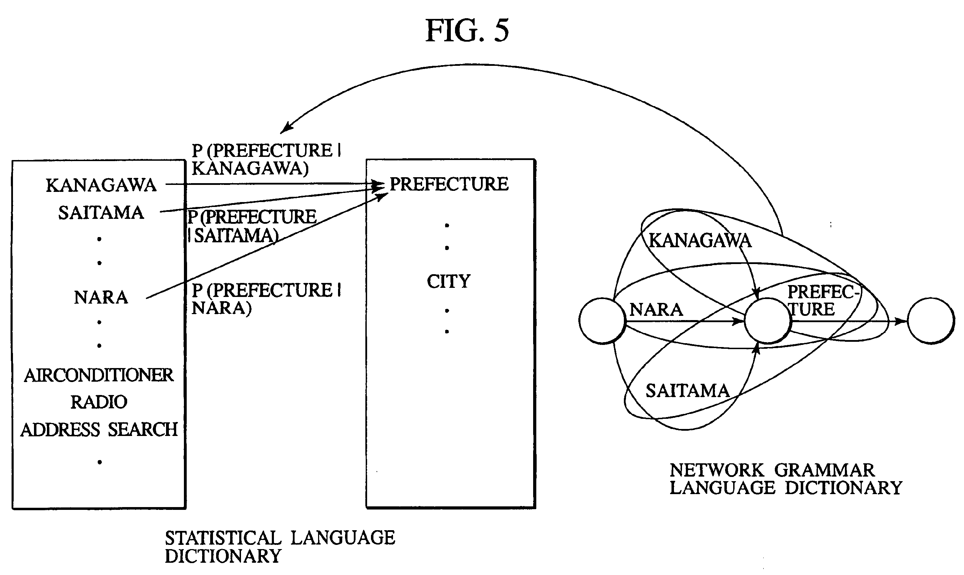

Figure 5 is a view explaining the probability changing method carried out in step S150 of Fig. 4. This example is based on an assumption that step S140 of Fig. 4 predicts an address input to be made in the next speech and step S150 updates the statistical language dictionary accordingly. The network grammar language dictionary shown on the right side of Fig. 5 includes "Kanagawa," 'Nara," and "Saitama" followed by "Prefecture." From the network grammar language dictionary, connected words "Kanagawa Prefecture," "Nara Prefecture," and "Saitama Prefecture" are picked up, and probabilities assigned to them are increased in the statistical language dictionary shown on the left side of Fig. 5. For example, the following is calculated for "Nara Prefecture":

$$P_{New}(Prefecture|Nara) = P_{old}(Prefecture|Nara)^{1/\gamma} \quad (3)$$

where $\gamma > 1$, and $\gamma$ is predetermined

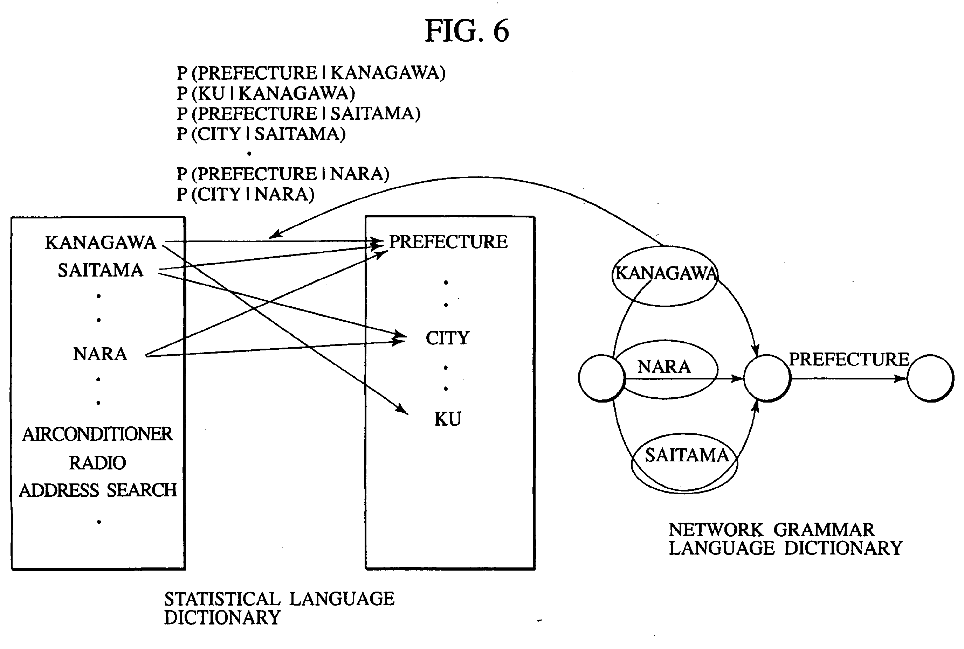

Figure 6 shows an example to improve, in the statistical language dictionary, the connection probabilities of words contained in the network grammar language dictionary and of words or morphemes connectable to the words contained in the network grammar language dictionary. This example changes, in the statistical language dictionary, the probabilities of connections of words found in the network grammar language dictionary as well as the connection probabilities of morphemes and words connectable to the words in the network grammar language dictionary. The network grammar language dictionary of Fig. 6 contains "Kanagawa," "Nara," and "Saitama" followed by "Prefecture."

Then, the connection probability of each word that is in the statistical language dictionary and is connectable to "Kanagawa," 'Nara," and "Saitama" is changed. For example, words connectable to "Kanagawa" and contained in the statistical language dictionary are "Prefecture" and "Ku (means "Ward" in Japanese) and therefore, the probabilities P(PrefecturelKanagawa) and P(KulKanagawa) are changed according to the expression (3). Such probability changing calculations can be conducted on the statistical language dictionary before voice recognition. Alternatively, the calculations may be conducted in voice recognition by comparing connected words contained in a recognized voice candidate with words in the network grammar language dictionary and if the connected words in the candidate are found in the network grammar language dictionary.

A method of using network grammar language dictionaries will be explained.

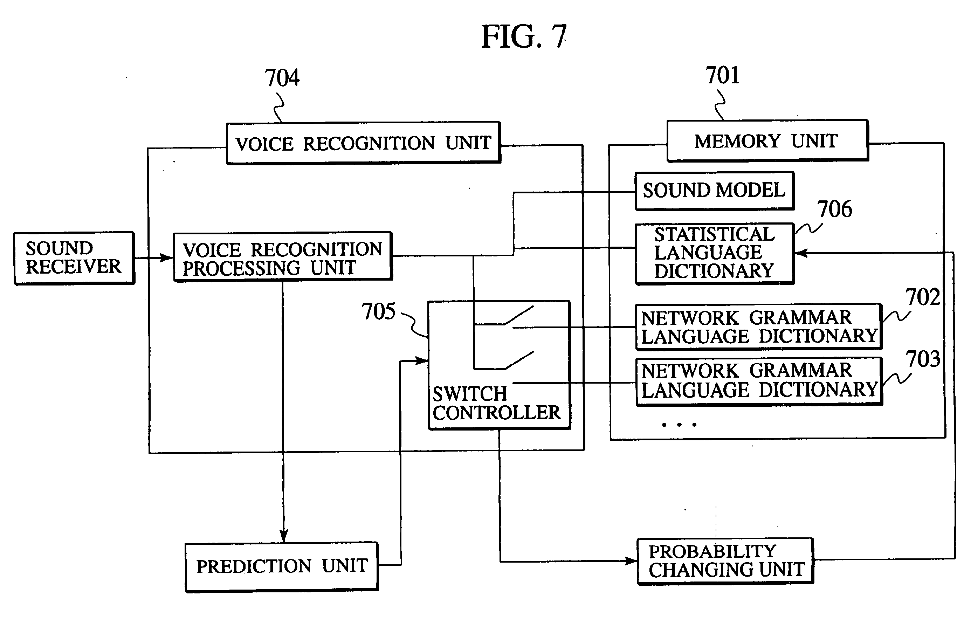

Figure 7 explains a method of switching a plurality of small-scale network grammar language dictionaries from one to another. This is suitable when contents to be displayed are difficult to predict, like an Internet webpage. In Fig. 7, information displayed on a screen is fetched in a memory unit 701, and at the same time, a dictionary is registered. In this case, it is required to recognize contents presently displayed and those previously displayed. For this, a plurality of small-scale network grammar language dictionaries 702 and 703 are read in the memory unit 701, or unnecessary dictionaries are deleted from the memory unit 701. Each language dictionary once registered in the memory unit 701 is connectable to a voice recognition unit 704 through a switch controller 705. Any dictionary that is unnecessary for the time being is disconnected from the voice recognition unit 704 through the switch controller 705. Any dictionary that is not used for a long time is deleted from the memory unit 701.

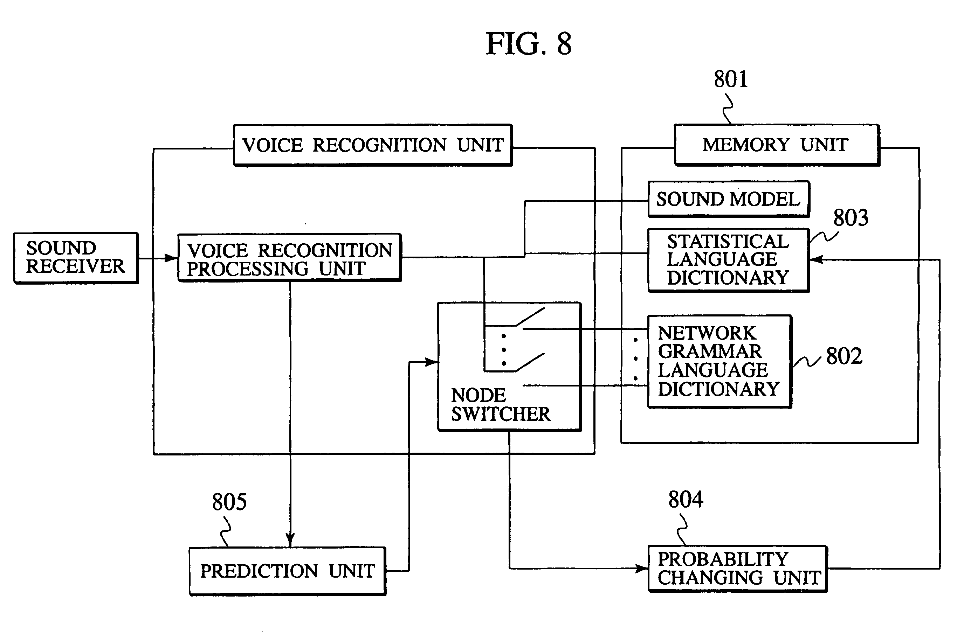

Figure 8 explains an example storing a large-scale network grammar language dictionary 802 in a memory unit 801 and dynamically activating only a node of the dictionary 802 related to a predicted next speech. This example is appropriate for, for example, a car navigation system that stores, in the memory unit 801, a large amount of essential information including addresses, facilities, and the like required when setting a destination on the car navigation system.

According to this example, the memory unit 801 stores a statistical language dictionary 803 and at least one network grammar language dictionary 802 containing words to be voiced. A probability changing unit 804 selects a node in the network grammar language dictionary 802 suitable for a next speech predicted by a prediction unit 805 so that the transition probabilities of connected words that are contained in the statistical language dictionary 803 and are in the selected node of the network grammar language dictionary 802 are increased.

The network grammar language dictionary has a tree structure involving a plurality of hierarchical levels and a plurality of nodes. The tree structure is a structure resembling a tree with a thick trunk successively branched into thinner branches. In the tree structure, higher hierarchical levels are divided into lower hierarchical levels.

A prediction method conducted with any one of the systems of Figs. 1 and 2 will be explained in detail. As an example, an address inputting task carried out according to the present invention with a car navigation system having a display unit will be explained. The address inputting task is achieved by arranging data including prefecture names, city, ward, town, and village names, town area names, and addresses in a hierarchical structure, storing the data in the car navigation system, and prompting a user to voice-input information for the top of the hierarchy. At this time, there are a technique of prompting the user to enter information level by level and a technique of prompting the user to continuously enter information along the hierarchical levels. Information on input commands is stored in a network grammar language dictionary.

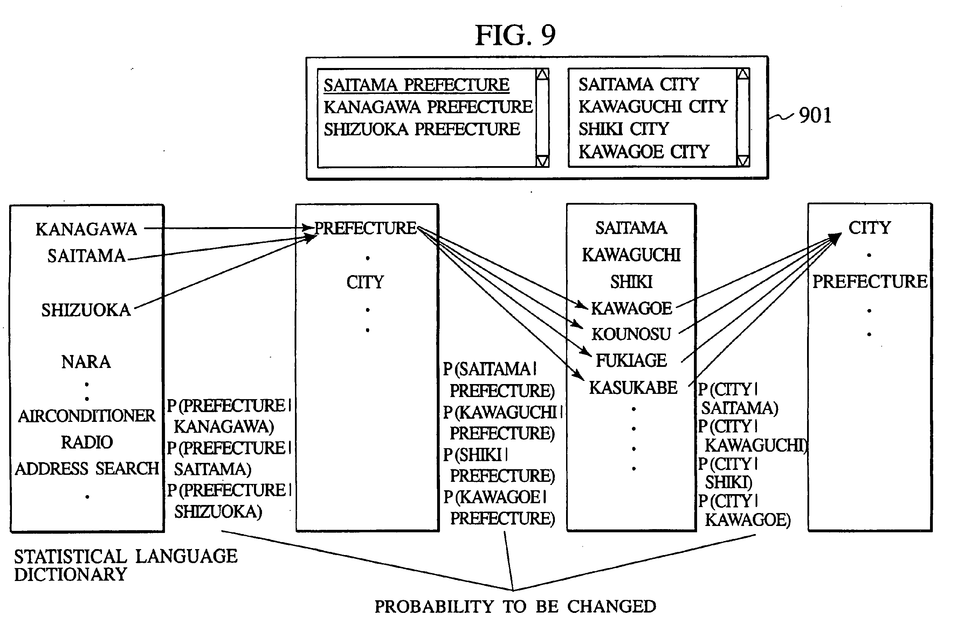

Figure 9 shows an example of a network grammar language dictionary displayed on a display unit according to the present invention. The displayed information helps the user grasp words in the network grammar language dictionary, informs the user of commands to be input into the system, and prompts the user to enter one of the displayed words as a command. Any one of the displayed connected words is to be included in a command voiced by the user. Accordingly, a prediction unit of the system predicts that the displayed connected words have a possibility of being pronounced in the next speech. In the example of Fig. 9, the display 901 displays four prefecture names and four city names (Saitama City, Kawaguchi City, Shiki City, and Kawagoe City) corresponding to the prefecture name "Saitama Prefecture" on which a cursor (underbar) is set. Accordingly, the probabilities of the displayed connected words are changed in a statistical language dictionary.

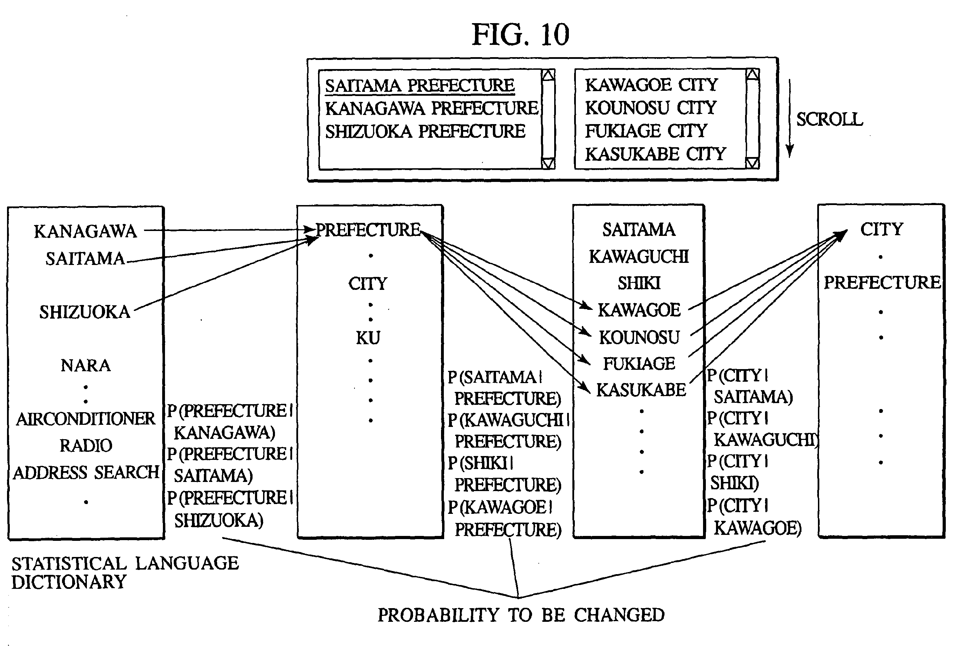

Figure 10 shows connected words displayed in the right window of the display 901 of Fig. 9 after the right window is scrolled. In Fig. 9, the city-town-village-name window (i.e., the right window) of the display 901 shows Saitama City, Kawaguchi City, Shiki City, and Kawagoe City. In Fig. 10, the same window shows Kawagoe City, Kounosu City, Fukiage City, and Kasukabe City. Accordingly, the connected words displayed in the display 901 of Fig. 10 are predicted to be voiced in the next speech and their probabilities are changed in the statistical language dictionary.

In addition to the displayed connected words, other connected words made by connecting the displayed words with grammatically connectable morphemes may be predicted to be voiced in the next speech. In this case, the memory unit of the system may store a connection list of parts of speech for an objective language and processes for specific words, to improve efficiency.

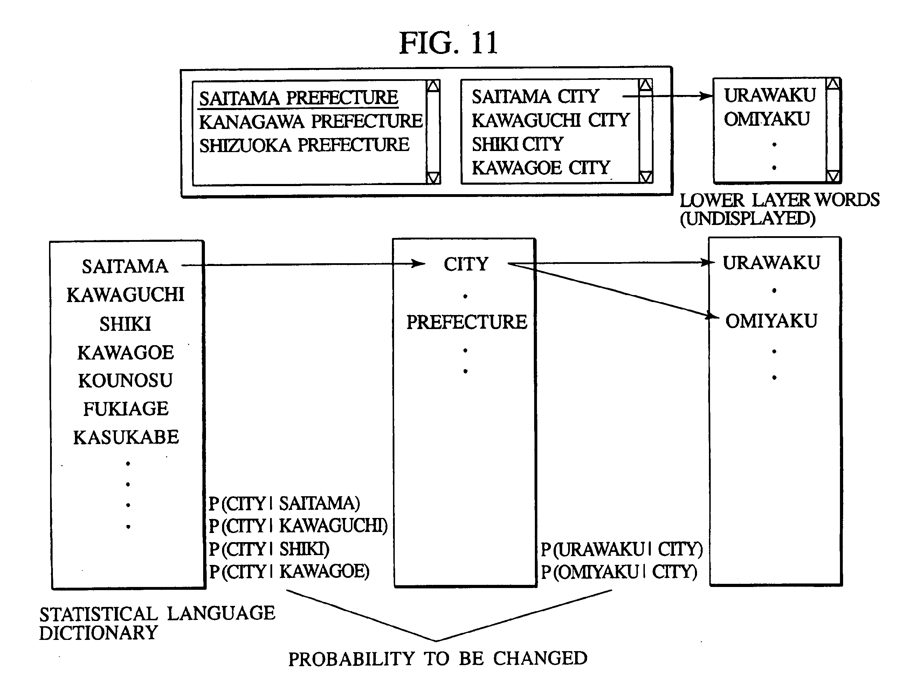

Figure 11 shows an example that forms connected words from a displayed word and lower-level words and predicts the connected words to be voiced in the next speech. For example, a displayed word "Saitama City" is followed by a plurality of lower-level ward names. Accordingly, city-ward-name connected words such as "Saitama City," "City Urawa Ku," and "City Ohmiya Ku" are formed and predicted to be voiced in the next speech.

Next, groups of words and words in sentences that are frequently used in displaying Internet webpage will be explained in connection with voice recognition according to the present invention.

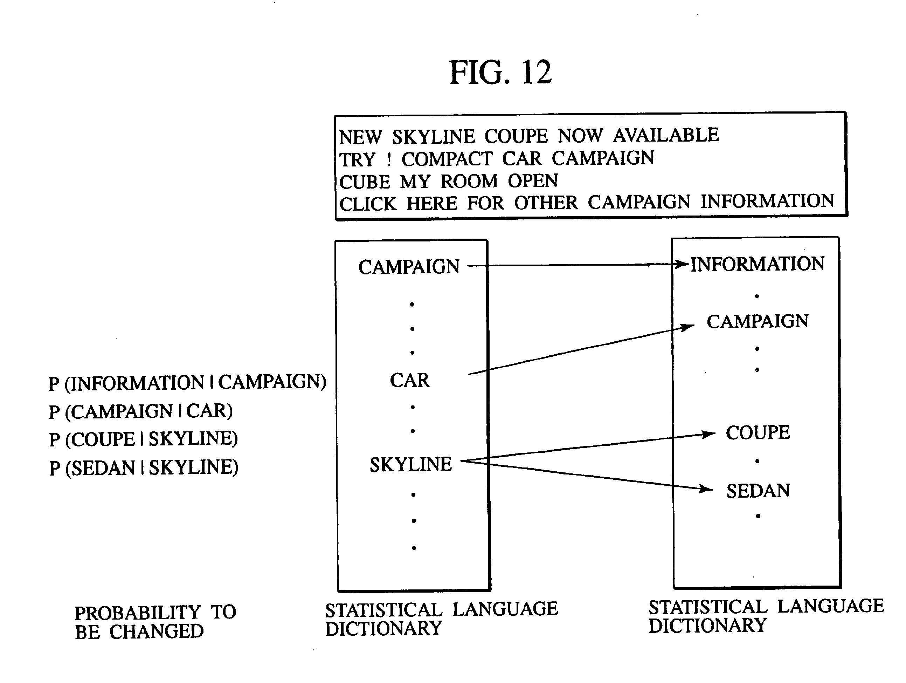

Figure 12 shows an example of a screen displaying four groups of words each group containing a plurality of connected words. In this case, each connected word is predicted as a word to be voiced next time. In addition, connected words made of the individual words and words connectable thereto are predicted as words to be voiced next time. In Fig. 12, a word "Skyline" forms a displayed connected word "Skyline Coupe" which is predicted to be voiced next time. In addition, if stored as commodity lineup information in the memory unit, a connected word of "Skyline Sedan" is also predicted to be voiced in the next speech.

Information made of a group of words or a sentence may be provided as voice guidance. Information provided with voice guidance is effective to reduce the number of words to be predicted as words to be voiced next time. In the example of Fig. 12, if the first group of words "New Skyline Coupe Now Available" among the four word groups in the displayed menu is voiced, connected words whose probabilities are changed include:

Connected words group 1: New Skyline, New Cube, ...
Connected words group 2: Skyline Coupe, Skyline Sedan, ...
Connected words group 3: Coupe Now, ...
If the second group of words "Try! Compact Car Campaign" is presented by voice, connected words whose probabilities are changed include:

Connected words group 4: Try Compact, ...
Connected words group 5: Compact Car, ...
Connected words group 6: Car Campaign, Car Dealer, ...

In this case, the probabilities of the connected words are changed in order of the voiced sentences, and after a predetermined time period, the probabilities are gradually returned to original probabilities. In this way, the present invention can effectively be combined with voice guidance, to narrow the range of connected words to be predicted as words to be pronounced next time.

Synonyms of displayed or voiced connected words may also be predicted as words to be voiced next time. The simplest way to achieve this is to store a thesaurus in the memory unit, retrieves synonyms of an input word, prepares connected words made by replacing the input word with the synonyms, and predicts the prepared connected words to be voiced in the next speech.

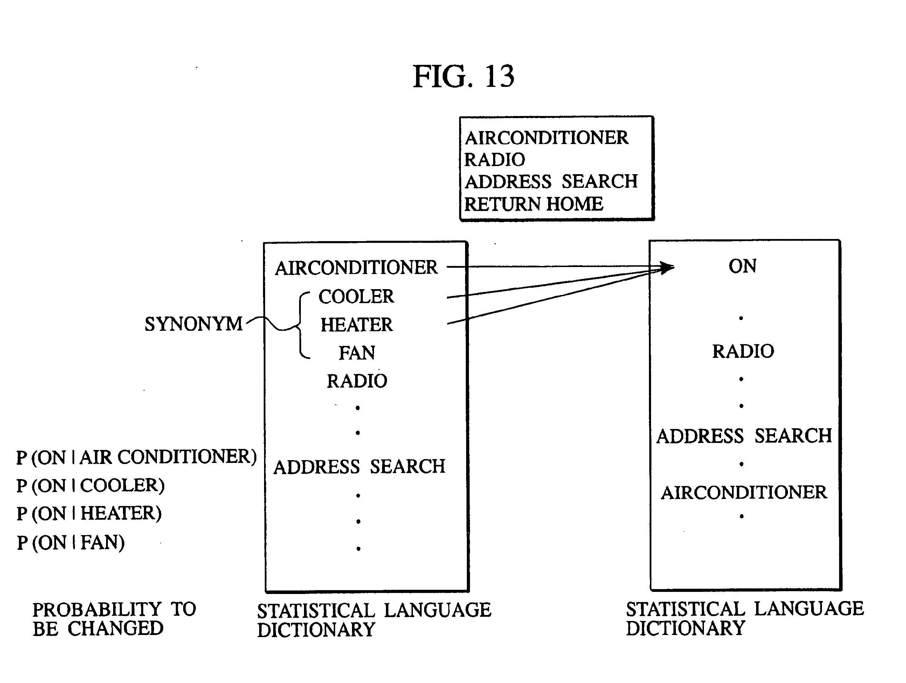

Figure 13 shows four words displayed on a screen. Among the words, "Air Conditioner" is selected to find synonyms thereof, and the synonyms are added to a statistical language dictionary. For the synonyms, connected words are prepared and added as predicted connected words. The added words include "Cooler" and "Heater", and connected words are prepared for them as follows:

Cooler ON, Cooler OFF
Heater ON, Heater OFF

These connected words are predicted to be voiced in the next speech. The predicted words may be limited to those that can serve as subjects or predicates to improve processing efficiency.

Finally, a method of predicting words to be voiced in the next speech according to the history of voice inputs.

As explained with the voice guidance example, the history of presented information can be used to gradually change the probabilities of connected words as the history of information is accumulated in a statistical language dictionary. This method is effective and can be improved into the following alternatives:

1. Continuously changing for a predetermined period of time the probabilities of connected words belonging to a hierarchical level once displayed by a user.
2. Continuously changing for a predetermined period of time the probabilities of connected words input several turns before.
3. Continuously changing the probabilities of connected words related to a user's habit appeared in the history of presented information.

Examples of the user's habit mentioned in the above item 3 are:

always setting the radio at the start of the system; and

turning on the radio at a specific hour.

If such a habitual behavior is found in the history of presented information, the probabilities of connected words related to the behavior are increased to make the system more convenient for the user.

If a predicted connected word is absent in the statistical language dictionary in any one of the above-mentioned examples, the word and the connection probability thereof can be added to the statistical language dictionary at once.

The embodiments and examples mentioned above have been provided only for clear understanding of the present invention and are not intended to limit the scope of the present invention.

As mentioned above, the present invention realizes a voice recognition system for a mobile unit capable of maintaining recognition accuracy without increasing grammatical restrictions on input voices, the volume of storage, or the scale of the system.

The present invention can reduce voice recognition computation time and realize real-time voice recognition in a mobile unit These effects are provided by adopting recognition algorithms employing a tree structure and by managing the contents of network grammar language dictionaries. In addition, the present invention links the dictionaries with information provided for a user, to improve the accuracy of prediction of the next speech.

The present invention can correctly predict words to be voiced in the next speech according to information provided in the form of word groups or sentences. This results in increasing the degree of freedom of speeches made by a user without increasing the number of words stored in a statistical language dictionary. Even if a word not contained in the statistical language dictionary is predicted for the next speech, the present invention can handle the word.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

**Claims**

1.  A voice recognition system for a mobile unit comprising:

    a memory unit (140, 270, 350, 701, 801) configured to store a statistical language dictionary (706, 803) which statistically registers connections among words;
    a voice recognition unit (120, 220, 330, 704) configured to recognize an input voice based on the statistical language dictionary (706, 803);
    a prediction unit (130, 250, 330, 805) configured to predict, according to the recognition result provided by the voice recognition unit (120, 220, 330, 704), connected words possibly voiced after the input voice; and
    a probability changing unit (150, 260, 330, 804) (150, 260, 330, 804) configured to change the probabilities of connected words in the statistical language dictionary (706, 803) according to the prediction result provided by the prediction unit (130,250,330,805),

    wherein the voice recognition unit (120, 220, 330, 704) recognizes next input voice based on the statistical language dictionary (706, 803) changed by the probability changing unit (150, 260, 330, 804) and wherein the memory unit (140, 270, 350, 701, 801), the voice recognition unit (120, 220, 330, 704), the prediction unit (130, 250, 330, 805) and the probability changing unit (150, 260, 330, 804) are configured to be installed in the mobile unit.

2.  The voice recognition system of claim 1, further comprising:

    a voice receiver (110, 220, 310) configured to receive a voice,

    wherein the memory unit (140, 270, 350, 701, 801) storing phoneme and word dictionaries to be employed for recognizing the received voice and the statistical language dictionary (706, 803) which statistically registers grammar of connected words; and
    the probability changing unit (150, 260, 330, 804) changes the probabilities of relationships among connected words in the statistical language dictionary (706, 803) according to the connected words predicted by the prediction unit (130, 250, 330, 805).

3.  The voice recognition system of claim 2, wherein:

    the memory unit (140, 270, 350, 701, 801) stores the statistical language dictionary (706, 803) and a plurality of network grammar language dictionaries (702,703, 802) each having a network structure to describe connections among words, word groups, and morphemes; and
the probability changing unit (150, 260, 330, 804) selects at least one of the plurality of network grammar language dictionaries (702,703, 802) appropriate for the connected words predicted by the prediction unit (130, 250, 330, 805) and increases, in the statistical language dictionary (706, 803), the transition probabilities of connected words in the selected network grammar language dictionary.

4. The voice recognition system of claim 2, wherein:

the memory unit (140, 270, 350, 701, 801) stores the statistical language dictionary (706, 803) and at least one network grammar language dictionary; and
the probability changing unit (150, 260, 330, 804) selects at least a node of the network grammar language dictionary appropriate for the connected words predicted by the prediction unit (130, 250, 330, 805) and increases, in the statistical language dictionary (706, 803), the transition probabilities of connected words in the selected node.

5. The voice recognition system of claim 3 or 4, wherein:

the network grammar language dictionary (702, 703, 802) has a tree structure involving a plurality of hierarchical levels and a plurality of nodes.

6. The voice recognition system of claim 3 or 4, wherein:

the network grammar language dictionary (702, 703, 802) includes information on connections between ones selected from the group consisting of word groups, words, and morphemes and at least one selected from the group consisting of a word group, a word, and a morpheme connectable to the selected ones.

7. The voice recognition system of claim 5 or 6, wherein:

the network grammar language dictionary (702, 703, 802) stores place names in a hierarchical structure starting from a wide area of places to narrow areas of places; and
the prediction unit (130, 250, 330, 805) predicts, according to the hierarchical structure, connected words representative of place names possibly voiced next.

8. The voice recognition system of claim 2, further comprising:

an information controller configured to receive the recognition result from the voice recognition unit (120, 220, 330, 704) and output information to be provided for a user, and
an information providing unit (240, 340) configured to provide the information output from the information controller,

wherein the prediction unit (130, 250, 330, 805) predicts, according to the information provided by the information providing unit (240, 340), connected words possibly voiced next; and wherein the probability changing unit (150, 260, 330, 804) changes, according to the connected words predicted by the prediction unit (130, 250, 330, 805), the probabilities of connected words in the statistical language dictionary (706, 803) and increases, according to the information provided by the information providing unit, the probabilities of connected words in the statistical language dictionary (706, 803).

9. The voice recognition system of claim 8, wherein:

if the information output from the information controller and provided by the information providing unit (240, 340) has a hierarchical structure, the prediction unit (130, 250, 330, 805) predicts that words in each layer of the hierarchical structure and morphemes connectable to the words form connected words possibly voiced next; and
the probability changing unit (150, 260, 330, 804) increases the probabilities of the predicted words and morphemes in the statistical language dictionary (706, 803).

10. The voice recognition system of claim 8, wherein:

if the information output from the information controller and provided by the information providing unit (240, 340) is a group of words or a sentence of words, the prediction unit (130, 250, 330, 805) predicts that the words in the group or sentence of words form connected words possibly voiced next; and

the probability changing unit (150, 260, 330, 804) increases the connection probabilities of the same words and morphemes in the statistical language dictionary (706, 803) as those contained in the group or sentence of words.

11. The voice recognition system of any one of claims 1 to 10, wherein:

the memory unit (140,270,350,701,801) stores a thesaurus; and
the prediction unit (130, 250, 330, 805) includes, according to the thesaurus, synonyms of the predicted words in the connected words possibly voiced next.

12. The voice recognition system of claim 10, wherein:

the voice recognition unit (120, 220, 330, 704) recognizes an input voice based on the words included in the connected words possibly voiced next are limited to subjects and predicates.

13. The voice recognition system of claim 2, further comprising:

an information controller configured to receive the recognition result from the voice recognition unit (120, 220, 330, 704) and output information to be provided for a user; and
an information providing unit (240, 340) configured to provide the information output from the information controller,

wherein the prediction unit (130, 250, 330, 805) predicting, according to a history of information pieces provided by the information providing unit, connected words possibly voiced next by the user, and wherein the probability changing unit (150, 260, 330, 804) changing, according to the connected words predicted by the prediction unit (130, 250, 330, 805), the probabilities of connected words in the statistical language dictionary (706, 803) and increasing, according to the information provided by the information providing unit (240, 340), the probabilities of connected words in the statistical language dictionary (706, 803).

14. The voice recognition system of any one of claims 1 to 13, wherein:

the probability changing unit (150, 260, 330, 804) changes the changed probabilities of connected words toward initial probabilities as time passes.

15. The voice recognition system of any one of claims 1 to 14, wherein:

if a word in the connected words predicted by the prediction unit (130, 250, 330, 805) is absent in the statistical language dictionary (706, 803), the probability changing unit (150, 260, 330, 804) adds the word and the probabilities of the connected words to the statistical language dictionary (706, 803).

**Patentansprüche**

1. Spracherkennungssystem für eine mobile Einheit, das umfasst:

eine Speichereinheit (140, 270, 350, 701, 801), die so konfiguriert ist, dass sie ein statistisches Sprachwörterbuch (706, 803) speichert, das statistisch Verbindungen zwischen Wörtern registriert;
eine Spracherkennungseinheit (120, 220, 330, 704), die so konfiguriert ist, dass sie eingegebene Sprache auf Basis des statistischen Sprachwörterbuchs (706, 803) erkennt;
eine Vorhersageeinheit (130, 250, 330, 805), die so konfiguriert ist, dass sie entsprechend dem durch die Spracherkennungseinheit (120, 220, 330, 704) bereitgestellten Erkennungsergebnis verbundene Wörter vorhersagt, die möglicherweise nach der Spracheingabe gesprochen werden; und
eine Wahrscheinlichkeits-Änderungseinheit (150, 260, 330, 804) (150, 260, 330, 804), die so konfiguriert ist, dass sie die Wahrscheinlichkeiten verbundener Wörter in dem statistischen Sprachwörterbuch (706, 803) entsprechend dem durch die Vorhersageeinheit (130, 250, 330, 805) bereitgestellten Vorhersageergebnis ändert,

wobei die Spracherkennungseinheit (120, 220, 330, 704) nächste Spracheingabe auf Basis des durch die Wahrscheinlichkeits-Änderungseinheit (150, 260, 330, 804) geänderten statistischen Sprachwörterbuchs (706, 803) erkennt, und wobei die Speichereinheit (140, 270, 350, 701, 801), die Spracherkennungseinheit (120, 220, 330, 704), die Vorhersageeinheit (130, 250, 330, 805) und die Wahrscheinlichkeits-Änderungseinheit (150, 260, 330, 804)) so konfiguriert sind, dass sie in der Mobileinheit installiert sind.

2. Spracherkennungssystem nach Anspruch 1, das des Weiteren umfasst:

   einen Sprachempfänger (110, 220, 310), der zum Empfangen von Sprache konfiguriert ist,

   worin die Speichereinheit (140, 270, 350, 701, 801) Phoneme und Sprachwörterbücher, die zum Erkennen der empfangenen Sprache zu verwenden sind, sowie das statistische Sprachwörterbuch (706, 803) speichert, das statistisch Grammatik verbundener Wörter registriert; und
   die Wahrscheinlichkeits-Änderungseinheit (150, 260, 330, 804) die Wahrscheinlichkeiten von Beziehungen zwischen verbundenen Wörtern in dem statistischen Sprachwörterbuch (706, 803) entsprechend den durch die Vorhersageeinheit (130, 250, 330, 805) vorhergesagten verbundenen Wörtern ändert.

3. Spracherkennungssystem nach Anspruch 2, wobei:

   die Speichereinheit (140, 270, 350, 701, 801) das statistische Sprachwörterbuch (706, 803) und eine Vielzahl von Netzwerkgrammatik-Sprachwörterbüchern (702, 703, 802) speichert, die eine Netzwerkstruktur zum Beschreiben von Verbindungen zwischen Wörtern, Wortgruppen und Morphemen haben; und
   die Wahrscheinlichkeits-Änderungseinheit (150, 260, 330, 804) wenigstens eines der Vielzahl von Netzwerkgrammatik-Sprachwörterbüchern (702, 703, 802) auswählt, die für die durch die Vorhersageeinheit (130, 250, 330, 805) vorhergesagten verbundenen Wörter geeignet sind, und in dem statistischen Sprachwörterbuch (706, 803) die Übergangswahrscheinlichkeiten verbundener Wörter in dem ausgewählten Netzwerkgrammatik-Sprachwörterbuch erhöht.

4. Spracherkennungssystem nach Anspruch 2, wobei:

   die Speichereinheit (140, 270, 350, 701, 801) das statistische Sprachwörterbuch (706, 803) und wenigstens ein Netzwerkgrammatik-Sprachwörterbuch speichert; und
   die Wahrscheinlichkeits-Änderungseinheit (150, 260, 330, 804) wenigstens einen Knoten des Netzwerkgrammatik-Sprachwörterbuches auswählt, der für die durch die Vorhersageeinheit (130, 250, 330, 805) vorhergesagten verbundenen Wörter geeignet ist, und in dem statistischen Sprachwörterbuch (706, 803) die Übergangswahrscheinlichkeiten verbundener Wörter in dem ausgewählten Knoten erhöht.

5. Spracherkennungssystem nach Anspruch 3 oder 4, wobei:

   das Netzwerkgrammatik-Sprachwörterbuch (702, 703, 802) eine Baumstruktur hat, die eine Vielzahl hierarchischer Ebenen und eine Vielzahl von Knoten enthält.

6. Spracherkennungssystem nach Anspruch 3 oder 4, wobei:

   das Netzwerkgrammatik-Sprachwörterbuch (702, 703, 802) Informationen über Verbindungen zwischen aus der Gruppe, die aus Wortgruppen, Worten und Morphemen besteht, Ausgewählten und wenigstens einem aus der Gruppe, die aus einer Wortgruppe, einem Wort und einem Morphem besteht, Ausgewählten, der mit den Ausgewählten verbunden werden können, enthält.

7. Spracherkennungssystem nach Anspruch 5 oder 6, wobei:

   das Netzwerkgrammatik-Sprachwörterbuch (702, 703, 802) Ortsnamen in einer hierarchischen Struktur ausgehend von einem breiten Bereich von Orten zu engen Bereichen von Orten speichert; und
   die Vorhersageeinheit (130, 250, 330, 805) entsprechend der hierarchischen Struktur verbundene Wörter vorhersagt, die repräsentativ für Ortsnamen sind, die möglicherweise als nächstes gesprochen werden.

8. Spracherkennungssystem nach Anspruch 2, das des Weiteren umfasst:

eine Informations-Steuereinheit, die so konfiguriert ist, dass sie das Erkennungsergebnis von der Spracherkennungseinheit (120, 220, 330, 704) empfängt und Informationen ausgibt, die einem Benutzer bereitzustellen sind; und
eine Informations-Bereitstellungseinheit (240, 340), die so konfiguriert ist, dass sie die von der Informations-Steuereinheit ausgegebenen Informationen bereitstellt,

wobei die Vorhersageeinheit (130, 250, 330, 805) entsprechend den durch die Informations-Bereitstellungseinheit (240, 340) bereitgestellten Informationen Wörter verwendet, die möglicherweise als nächstes gesprochen werden; und wobei die Wahrscheinlichkeits-Änderungseinheit (150, 260, 330, 804) entsprechend den durch die Vorhersageeinheit (130, 250, 330, 805) vorhergesagten verbundenen Wörtern die Wahrscheinlichkeiten verbundener Wörter in dem statistischen Sprachwörterbuch (706, 803) ändert und entsprechend den durch die Informations-Bereitstellungseinheit bereitgestellten Informationen die Wahrscheinlichkeit verbundener Wörter in dem statistischen Sprachwörterbuch (706, 803) erhöht.

9. Spracherkennungssystem nach Anspruch 8, wobei:

wenn die von der Informations-Steuereinheit ausgegebenen und durch die Informations-Bereitstellungseinheit (240, 340) bereitgestellten Informationen eine hierarchische Struktur haben, die Vorhersageeinheit (130, 250, 330, 805) vorhersagt, dass Wörter in jeder Schicht der hierarchischen Struktur und Morpheme, die mit den Wörtern verbunden werden können, verbundene Wörter bilden, die möglicherweise als nächstes gesprochen werden; und
die Wahrscheinlichkeits-Änderungseinheit (150, 260, 330, 804) die Wahrscheinlichkeiten der vorhergesagten Wörter und Morpheme in dem statistischen Sprachwörterbuch (706, 803) erhöht.

10. Spracherkennungssystem nach Anspruch 8, wobei:

wenn die von der Informations-Steuereinheit ausgegebenen und durch die Informations-Bereitstellungseinheit (240, 340) bereitgestellten Informationen eine Gruppe von Wörtern oder ein Satz aus Wörtern sind, die Vorhersageeinheit (130, 250, 330, 805) vorhersagt, dass die Wörter in der Gruppe oder dem Satz von Worten verbundene Wörter bilden, die möglicherweise als nächstes gesprochen werden; und
die Wahrscheinlichkeits-Änderungseinheit (150, 260, 330, 804) die Verbindungswahrscheinlichkeiten der gleichen Wörter und Morpheme in dem statistischen Sprachwörterbuch (706, 803) wie der in der Gruppe oder dem Satz aus Wörtern enthaltenen erhöht.

11. Spracherkennungssystem nach einem der Ansprüche 1 bis 10, wobei:

die Speichereinheit (140, 270, 350, 701, 801) einen Thesaurus speichert; und
die Vorhersageeinheit (130, 250, 330, 805) entsprechend dem Thesaurus Synonyme der vorhergesagten Wörter in den verbundenen Wörtern enthält, die möglicherweise als nächstes gesprochen werden.

12. Spracherkennungssystem nach Anspruch 10, wobei:

die Spracherkennungseinheit (120, 220, 330, 704) eine Eingabesprache darauf basierend erkennt, dass die Wörter, die in den verbundenen Wörtern enthalten sind, die möglicherweise als nächstes gesprochen werden, auf Subjekte und Prädikate begrenzt sind.

13. Spracherkennungssystem nach Anspruch 2, das des Weiteren umfasst:

eine Informations-Steuereinheit, die so konfiguriert ist, dass sie das Erkennungsergebnis von der Spracherkennungseinheit (120, 220, 330, 704) empfängt und Informationen ausgibt, die einem Benutzer bereitzustellen sind; und
eine Informations-Bereitstellungseinheit (240, 340), die so konfiguriert ist, dass sie die von der Informations-Steuereinheit ausgegebenen Informationen bereitstellt,

wobei die Vorhersageeinheit (130, 250, 330, 805) entsprechend einem Verlauf von Informationselementen, die durch die Informations-Bereitstellungseinheit bereitgestellt werden, verbundene Wörter vorhersagt, die möglicherweise durch den Benutzer als nächstes gesprochen werden, und wobei die Wahrscheinlichkeits-Änderungseinheit (150, 260, 330, 804) entsprechend den durch die Vorhersageeinheit (130, 250, 330, 805) vorhergesagten verbundenen Wörtern die Wahrscheinlichkeiten verbundener Wörter in dem statistischen Sprachwörterbuch (706, 803) ändert und entsprechend den durch die Informations-Bereitstellungseinheit (240, 340) bereitgestellten Informationen die Wahrscheinlichkeiten verbundener Wörter in dem statistischen Sprachwörterbuch (706, 803) erhöht.

**14.** Spracherkennungssystem nach einem der Ansprüche 1 bis 13, wobei:

die Wahrscheinlichkeits-Änderungseinheit (150, 260, 330, 804) die veränderten Wahrscheinlichkeiten verbundener Wörter im Verlauf der Zeit in Richtung anfänglicher Wahrscheinlichkeiten ändert.

**15.** Spracherkennungssystem nach einem der Ansprüche 1 bis 14, wobei:

wenn ein Wort in den durch die Vorhersageeinheit (130, 250, 330, 805) vorhergesagten Worten in dem statistischen Sprachwörterbuch (706, 803) nicht vorhanden ist, die Wahrscheinlichkeits-Änderungseinheit (150, 260, 330, 804) das Wort und die Wahrscheinlichkeiten der verbundenen Wörter zu dem statistischen Sprachwörterbuch (706, 803) hinzufügt.

**Revendications**

**1.** Système de reconnaissance vocale pour une unité mobile, comprenant :

une unité de mémoire (140, 270, 350, 701, 801) configurée pour stocker un dictionnaire de langage statistique (706, 803) qui enregistre statistiquement des connexions entre mots ;
une unité de reconnaissance vocale (120, 220, 330, 704) configurée pour reconnaître une voix d'entrée en se basant sur le dictionnaire de langage statistique (706, 803) ;
une unité de prédiction (130, 250, 330, 805) configurée pour prédire, selon le résultat de la reconnaissance fourni par l'unité de reconnaissance vocale (120, 220, 330, 704), des mots connectés probablement prononcés après la voix d'entrée ; et
une unité de changement de probabilité (150, 260, 330, 804) configurée pour changer les probabilités de mots connectés dans le dictionnaire de langage statistique (706, 803) selon le résultat de la prédiction fourni par l'unité de prédiction (130, 250, 330, 805),

dans lequel l'unité de reconnaissance vocale (120, 220, 330, 704) reconnaît la voix d'entrée suivante en se basant sur le dictionnaire de langage statistique (706, 803) modifié par l'unité de changement de probabilité (150, 260, 330, 804) et dans lequel l'unité de mémoire (140, 270, 350, 701, 801), l'unité de reconnaissance vocale (120, 220, 330, 704), l'unité de prédiction (130, 250, 330, 805) et l'unité de changement de probabilité (150, 260, 330, 804) sont configurées pour être installées dans l'unité mobile.

**2.** Système de reconnaissance vocale selon la revendication 1, comprenant en outre :

un récepteur vocal (110, 220, 310) configuré pour recevoir une voix,
dans lequel l'unité de mémoire (140, 270, 350, 701, 801) stockant des dictionnaires de phonèmes et de mots devant être employés pour reconnaître la voix reçue et le dictionnaire de langage statistique (706, 803) qui enregistre statistiquement la grammaire des mots connectés ; et
l'unité de changement de probabilité (150, 260, 330, 804) modifie les probabilités de relations entre les mots connectés dans le dictionnaire de langage statistique (706, 803) selon les mots connectés prédits par l'unité de prédiction (130, 250, 330, 805).

**3.** Système de reconnaissance vocale selon la revendication 2, dans lequel :

l'unité de mémoire (140, 270, 350, 701, 801) stocke le dictionnaire de langage statistique (706, 803) et une pluralité de dictionnaires de langage grammatical de réseau (702, 703, 802), ayant chacun une structure de réseau, pour décrire les connexions entre les mots, groupes de mots, et morphèmes ; et
l'unité de changement de probabilité (150, 260, 330, 804) sélectionne au moins un de la pluralité de dictionnaires de langage grammatical de réseau (702, 703, 802) appropriés pour les mots connectés prédits par l'unité de prédiction (130, 250, 330, 805) et augmente, dans le dictionnaire de langage statistique (706, 803), les possibilités de transition de mots connectés dans le dictionnaire de langage grammatical de réseau sélectionné.

4. Système de reconnaissance vocale selon la revendication 2, dans lequel :

l'unité de mémoire (140, 270, 350, 701, 801) stocke le dictionnaire de langage statistique (706, 803) et au moins un dictionnaire de langage grammatical de réseau ; et

l'unité de changement de probabilité (150, 260, 330, 804) sélectionne au moins un noeud du dictionnaire de langage grammatical de réseau approprié pour les mots connectés prédits par l'unité de prédiction (130, 250, 330, 805) et augmente, dans le dictionnaire de langage statistique (706, 803), les probabilités de transition de mots connectés dans le noeud sélectionné.

5. Système de reconnaissance vocale selon la revendication 3 ou 4, dans lequel :

le dictionnaire de langage grammatical de réseau (702, 703, 802) a une structure d'arbre impliquant une pluralité de niveaux hiérarchiques et une pluralité de noeuds.

6. Système de reconnaissance vocale selon la revendication 3 ou 4, dans lequel :

le dictionnaire de langage grammatical de réseau (702, 703, 802) comprend des informations sur les connexions entre des éléments sélectionnés dans le groupe comprenant les groupes de mots, mots et morphèmes et au moins un élément sélectionné dans le groupe comprenant un groupe de mot, un mot et un morphème connectable aux éléments sélectionnés.

7. Système de reconnaissance vocale selon la revendication 5 ou 6, dans lequel :

le dictionnaire de langage grammatical de réseau (702, 703, 802) stocke des noms de lieux dans une structure hiérarchique partant d'une zone de lieux large à des zones de lieux étroites ; et

l'unité de prédiction (130, 250, 330, 805) prédit, selon la structure hiérarchique, des mots connectés représentatifs de noms de lieux probablement prononcés par la suite.

8. Système de reconnaissance vocale selon la revendication 2, comprenant en outre :

un contrôleur d'informations configuré pour recevoir le résultat de la reconnaissance provenant de l'unité de reconnaissance vocale (120, 220, 330, 704) et produire des informations devant être fournies à un utilisateur ; et une unité de fourniture d'informations (240, 340) configurée pour fournir les informations produites par le contrôleur d'informations,

dans lequel l'unité de prédiction (130, 250, 330, 805) prédit, selon les informations fournies par l'unité de fourniture d'informations (240, 340), des mots connectés probablement prononcés par la suite ; et

dans lequel l'unité de changement de probabilité (150, 260, 330, 804) change, selon les mots connectés prédits par l'unité de prédiction (130, 250, 330, 805), les probabilités de mots connectés dans le dictionnaire de langage statistique (706, 803) et augmente, selon les informations fournies par l'unité de fourniture d'informations, les probabilités de mots connectés dans le dictionnaire de langage statistique (706, 803).

9. Système de reconnaissance vocale selon la revendication 8, dans lequel :

si les informations produites par le contrôleur d'informations et fournies par l'unité de fourniture d'informations (240, 340) ont une structure hiérarchique, l'unité de prédiction (130, 250, 330, 805) prédit que les mots dans chaque couche de la structure hiérarchique et les morphèmes connectables aux mots forment des mots connectés probablement prononcés par la suite ; et

l'unité de changement de probabilité (150, 260, 330, 804) augmente les probabilités des mots et morphèmes prédits dans le dictionnaire de langage statistique (706, 803).

10. Système de reconnaissance vocale selon la revendication 8, dans lequel :

si les informations produites par le contrôleur d'informations et fournies par l'unité de fourniture d'informations (240, 340) forment un groupe de mots ou une phrase de mots, l'unité de prédiction (130, 250, 330, 805) prédit que les mots dans le groupe ou la phrase de mots forment des mots connectés probablement prononcés par la suite ; et

l'unité de changement de probabilité (150, 260, 330, 804) augmente les probabilités de connexion des mêmes mots et morphèmes dans le dictionnaire de langage statistique (706, 803) en tant que ceux contenus dans le groupe ou la phrase de mots.

**11.** Système de reconnaissance vocale selon les revendications 1 à 10, dans lequel :

l'unité de mémoire (140, 270, 350, 701, 801) stocke un thésaurus ; et
l'unité de prédiction (130, 250, 330, 805) comprend, selon le thésaurus, des synonymes des mots prédits dans les mots connectés probablement prononcés par la suite.

**12.** Système de reconnaissance vocale selon la revendication 10, dans lequel :

l'unité de reconnaissance vocale (120, 220, 330, 704) reconnaît une voix d'entrée en se basant sur les mots inclus dans les mots connectés probablement prononcés par la suite qui sont limités aux sujets et prédicats.

**13.** Système de reconnaissance vocale selon la revendication 2, comprenant en outre :

un contrôleur d'informations configuré pour recevoir le résultat de la reconnaissance de l'unité de reconnaissance vocale (120, 220, 330, 704) et les informations de sortie devant être fournies à un utilisateur ; et
une unité de fourniture d'informations (240, 340) configurée pour fournir les informations produites par le contrôleur d'informations,

dans lequel l'unité de prédiction (130, 250, 330, 805) prédit, selon un historique des informations fournies par l'unité de fourniture d'informations, des mots connectés probablement prononcés par la suite par l'utilisateur, et dans lequel l'unité de changement de probabilité (150, 260, 330, 804) modifie, selon les mots connectés prédits par l'unité de prédiction (130, 250, 330, 805), les probabilités de mots connectés dans le dictionnaire de langage statistique (706, 803) et augmente, selon les informations fournies par l'unité de fourniture d'informations (240, 340), les probabilités de mots connectés dans le dictionnaire de langage statistique (706, 803).

**14.** Système de reconnaissance vocale selon l'une quelconque des revendications 1 à 13, dans lequel :

l'unité de changement de probabilité (150, 260, 330, 804) modifie avec le temps les probabilités changées de mots connectés vers des probabilités initiales.

**15.** Système de reconnaissance vocale selon l'une quelconque des revendications 1 à 14, dans lequel :

si un mot dans les mots connectés prédits par l'unité de prédiction (130, 250, 330, 805) est absent dans le dictionnaire de langage statistique (706, 803), l'unité de changement de probabilité (150, 260, 330, 804) ajoute le mot et les probabilités des mots connectés au dictionnaire de langage statistique (706, 803).

# FIG. 1

EP 1 475 780 B1

# FIG. 2

210 SOUND RECEIVER → 220 VOICE RECOGNITION UNIT → 230 INFORMATION CONTROLLER → 240 INFORMATION PROVIDING UNIT

270 MEMORY UNIT

250 PREDICTION UNIT

260 PROBABILITY CHANGING UNIT

# FIG. 3

310

SOUND SIGNAL
RECEIVING DEVICE

320

A/D CONVERTER

330

PROCESSOR

340

INFORMATION
PROVIDING DEVICE

350

MEMORY
UNIT

EP 1 475 780 B1

# FIG. 4

```
            ( START )
                │
                ▼
┌──────────────────────────┐
│    START  UP  PROCESS     │─── S110
└──────────────────────────┘
                │
                ▼
          ◇ S120
    DETECTS  VOICE ?────NO──┐
                │           │
              YES│          │
                ▼           │
┌──────────────────────────┐│
│   VOICE  RECOGNITION      ││─── S130
│   PROCESS  FOR  N-1       ││
└──────────────────────────┘│
                │           │
                ▼  S140      │
    DETECTS  STATUS          │
      CHANGE ?────NO─────────┘
                │
              YES│
                ▼
┌──────────────────────────┐
│  PROBABILITY  CHANGE      │─── S150
│  PROCESS                  │
└──────────────────────────┘
                │
                ▼
          ◇ S160
    DETECTS  VOICE ?────NO──┐
                │           │
              YES│          │
                ▼           │
┌──────────────────────────┐│
│   VOICE  RECOGNITION      ││─── S170
│   PROCESS  FOR  N         ││
└──────────────────────────┘│
                │  S180      │
                ▼           │
    DETECTS  STATUS          │
      CHANGE ?────NO─────────┘
                │
              YES│
                ▼
┌──────────────────────────┐
│  PROBABILITY  CHANGE      │─── S190
│  PROCESS                  │
└──────────────────────────┘
```

# FIG. 5

STATISTICAL LANGUAGE
DICTIONARY

NETWORK GRAMMAR
LANGUAGE DICTIONARY

EP 1 475 780 B1

## FIG. 6

P (PREFECTURE I KANAGAWA)
P (KU I KANAGAWA)
P (PREFECTURE I SAITAMA)
P (CITY I SAITAMA)

.

P (PREFECTURE I NARA)
P (CITY I NARA)

KANAGAWA

SAITAMA

.
.
.

NARA

.
.

AIRCONDITIONER

RADIO

ADDRESS SEARCH

.

PREFECTURE

.
.
.

CITY

.
.
.

KU

STATISTICAL LANGUAGE
DICTIONARY

KANAGAWA

NARA PREFECTURE

SAITAMA

NETWORK GRAMMAR
LANGUAGE DICTIONARY

EP 1 475 780 B1

# FIG. 7

EP 1 475 780 B1

# FIG. 8

VOICE RECOGNITION UNIT

MEMORY UNIT — 801

SOUND RECEIVER

VOICE RECOGNITION PROCESSING UNIT

SOUND MODEL

STATISTICAL LANGUAGE DICTIONARY — 803

NODE SWITCHER

NETWORK GRAMMAR LANGUAGE DICTIONARY — 802

805 — PREDICTION UNIT

804 — PROBABILITY CHANGING UNIT

EP 1 475 780 B1

# FIG. 9

SAITAMA PREFECTURE
KANAGAWA PREFECTURE
SHIZUOKA PREFECTURE

SAITAMA CITY
KAWAGUCHI CITY
SHIKI CITY
KAWAGOE CITY

~901

KANAGAWA
SAITAMA
SHIZUOKA

NARA
·
AIRCONDITIONER
RADIO
ADDRESS SEARCH
·

P(PREFECTURE|
KANAGAWA)
P(PREFECTURE|
SAITAMA)
P(PREFECTURE|
SHIZUOKA)

PREFECTURE
·
CITY
·
·

P(SAITAMA|
PREFECTURE)
P(KAWAGUCHI|
PREFECTURE)
P(SHIKI|
PREFECTURE)
P(KAWAGOE|
PREFECTURE)

SAITAMA
KAWAGUCHI
SHIKI
KAWAGOE
KOUNOSU
FUKIAGE
KASUKABE
·
·
·
·

P(CITY|
SAITAMA)
P(CITY|
KAWAGUCHI)
P(CITY|
SHIKI)
P(CITY|
KAWAGOE)

CITY
·
PREFECTURE
·
·

STATISTICAL LANGUAGE
DICTIONARY

PROBABILITY TO BE CHANGED

EP 1 475 780 B1

# FIG. 10

| SAITAMA PREFECTURE | KAWAGOE CITY |
|---|---|
| KANAGAWA PREFECTURE | KOUNOSU CITY |
| SHIZUOKA PREFECTURE | FUKIAGE CITY |
| | KASUKABE CITY |

SCROLL ↓

KANAGAWA ──→ PREFECTURE
SAITAMA ──→
SHIZUOKA ──→
·
CITY
·
NARA · KU
· ·
AIRCONDITIONER ·
RADIO ·
ADDRESS SEARCH
·

P(PREFECTURE | KANAGAWA)
P(PREFECTURE | SAITAMA)
P(PREFECTURE | SHIZUOKA)

P(SAITAMA | PREFECTURE)
P(KAWAGUCHI | PREFECTURE)
P(SHIKI | PREFECTURE)
P(KAWAGOE | PREFECTURE)

SAITAMA
KAWAGUCHI
SHIKI
KAWAGOE
KOUNOSU
FUKIAGE
KASUKABE
·
·
·
·

P(CITY | SAITAMA)
P(CITY | KAWAGUCHI)
P(CITY | SHIKI)
P(CITY | KAWAGOE)

CITY
·
PREFECTURE
·
·
·

STATISTICAL LANGUAGE DICTIONARY

PROBABILITY TO BE CHANGED

EP 1 475 780 B1

# FIG. 11

SAITAMA PREFECTURE
KANAGAWA PREFECTURE
SHIZUOKA PREFECTURE

SAITAMA CITY
KAWAGUCHI CITY
SHIKI CITY
KAWAGOE CITY

URAWAKU
OMIYAKU
·
·

LOWER LAYER WORDS
(UNDISPLAYED)

SAITAMA
KAWAGUCHI
SHIKI
KAWAGOE
KOUNOSU
FUKIAGE
KASUKABE
·
·
·
·

CITY
·
PREFECTURE
·
·

URAWAKU
·
OMIYAKU
·
·

P(CITY | SAITAMA)
P(CITY | KAWAGUCHI)
P(CITY | SHIKI)
P(CITY | KAWAGOE)

P(URAWAKU | CITY)
P(OMIYAKU | CITY)

STATISTICAL LANGUAGE
DICTIONARY

PROBABILITY TO BE CHANGED

EP 1 475 780 B1

# FIG. 12

| NEW SKYLINE COUPE NOW AVAILABLE |
| TRY ! COMPACT CAR CAMPAIGN |
| CUBE MY ROOM OPEN |
| CLICK HERE FOR OTHER CAMPAIGN INFORMATION |

P (INFORMATION I CAMPAIGN)

P (CAMPAIGN I CAR)

P (COUPE I SKYLINE)

P (SEDAN I SKYLINE)

CAMPAIGN → INFORMATION

CAR → CAMPAIGN

SKYLINE → COUPE / SEDAN

PROBABILITY TO BE CHANGED

STATISTICAL LANGUAGE DICTIONARY

STATISTICAL LANGUAGE DICTIONARY

# FIG. 13

AIRCONDITIONER
RADIO
ADDRESS SEARCH
RETURN HOME

STATISTICAL LANGUAGE DICTIONARY:

AIRCONDITIONER
SYNONYM { COOLER / HEATER / FAN }
RADIO
.
.
ADDRESS SEARCH
.
.
.

P (ON I AIR CONDITIONER)
P (ON I COOLER)
P (ON I HEATER)
P (ON I FAN)

PROBABILITY TO
BE CHANGED

STATISTICAL LANGUAGE
DICTIONARY

STATISTICAL LANGUAGE DICTIONARY:

ON
.
RADIO
.
.
ADDRESS SEARCH
.
AIRCONDITIONER
.

STATISTICAL LANGUAGE
DICTIONARY

EP 1 475 780 B1

# FIG. 14

KANAGAWA

ADDRESS IS    NARA    PREFECTURE

SAITAMA

# FIG. 15

P (PREFECTURE I NARA)    PREFECTURE

NARA

P (CITY I NARA)    CITY